# EUROPEAN PATENT APPLICATION

(11) **EP 4 112 751 A1**
(43) Date of publication of application: **04.01.2023**
(21) Application number: 21760459.4
(22) Date of filing: 24.02.2021
(51) Int. Cl.: C21C 7/00, C22C 30/04, C22C 38/00, C22C 38/58

(54) **STAINLESS STEEL FOR METAL FOILS, SATINLESS STEEL FOIL, METHOD FOR RODUCING STAINLESS STEEL FOR METAL FOILS, AND METHOD FOR PRODUCING THEM**

(30) Priority: 27.02.2020 JP 2020032108
(71) Applicant: NIPPON STEEL Stainless Steel Corporation, Tokyo 100-0005 (JP)
(72) Inventor: SAKAIZAWA, Yuto, Tokyo 100-0005 (JP); SHIBATA, Tooru, Tokyo 100-0005 (JP); KIKUCHI, Shin, Tokyo 100-0005 (JP); FUKUMOTO, Shigeo, Tokyo 100-0005 (JP)
(74) Representative: Ablett, Graham Keith
(86) International application number: PCT/JP2021/006931
(87) International publication number: WO 2021/172381

(57) **Abstract**

To provide a stainless steel for metal foils with excellent surface texture, a stainless steel foil, and methods for producing them. The stainless steel for metal foils includes, in mass%, 0.0001% or more and 0.15% or less of C, 0.30% or more and 2.0% or less of Si, 0.1% or more and 15% or less of Mn, 0.040% or less of P, 5% or more and 30% or less of Ni, 0.0001% or more and 0.01% or less of S, 16% or more and 25% or less of Cr, 5% or less of Mo, 0.005% or less of Al, 0.0030% or less of Ca, 0.0010% or less of Mg, 0.0010% or more and 0.0060% or less of O, and 0.0001% or more and 0.5% or less of N. The number of inclusions with a maximum equivalent circle diameter of 5 µm or more is 0.5 inclusions/mm² or less in a thickness of 0.010 mm or more and 0.2 mm or less.

## Description

### TECHNICAL FIELD

The present invention relates to a stainless steel for metal foils used for e.g. electronic equipment parts, etc., a stainless steel foil, and methods for producing them.

### BACKGROUND ART

Conventionally, methods for producing an ultra-clean stainless are classified roughly into two methods: a method using a special melting/remelting method, and a method using a versatile refining method.

The method using a special melting/remelting method can achieve high cleanliness but has extremely low productivity, and has high production costs, and is thus not suitable for mass production. Therefore, a versatile refining method is commonly used. However, while mass production can be achieved by a versatile refining method at relatively lower costs, it is not technically easy to obtain high cleanliness.

Therefore, it has been desired to achieve high cleanliness while using a versatile refining method.

PTL 1, for example, describes a method for suppressing flaws caused by Al₂O₃ inclusions by setting basicity at 1.0 to 1.5 and the concentration of Al₂O₃ in a slag at 10% or less in a refining step.

In addition, PTL 2 describes a method for suppressing MgO·Al₂O₃ by setting basicity at less than 2 to 5 and reducing the concentration of Al₂O₃ in a slag in a refining step.

### CITATION LIST

### Patent Literature

PTL 1: Japanese Patent No. 3416858
PTL 2: Japanese Patent No. 6146908

### SUMMARY OF INVENTION

### Technical Problem

In the method in PTL 1, however, there is a risk that large and hard MgO·Al₂O₃ inclusions with an equivalent circle diameter of 5 µm or more including Al₂O₃ will be generated because the upper limit of the Al₂O₃ concentration in a slag is high. When the inclusions are generated, because they are not extended by a rolling step, they are not observed as linear flaw. Therefore, the problem in PTL 1 is not a matter. However, there is a risk that the occurrence of surface defects cannot be prevented as a material from which an extremely thin stainless steel is produced by e.g. customers.

In addition, a steel with a high O concentration may be produced due to lack of deoxidation in the method in PTL 2, and there is a risk that large and hard MnO·Al₂O₃-Cr₂O₃ inclusions with an equivalent circle diameter or 5 µm or more will be generated. When the inclusions are generated, there is a risk that the occurrence of surface defects cannot be prevented as a material from which an extremely thin stainless steel is produced by e.g. customers.

As described above, hard inclusions mainly including MgO·Al₂O₃ and MnO·Al₂O₃·Cr₂O₃ exist in a stainless steel produced using a versatile refining method. These hard inclusions have a different deformation behavior from a base material when being polished due to differences in hardness from the base material, and thus holes at the time of production and variations in fatigue properties occur. In addition, e.g. changes in composition at the time of heating, the deformation and extension of inclusions at the time of rolling, and breaking are not considered in the methods in PTL 1 and PTL 2, and thus there is a risk that the occurrence of surface defects on an extremely thin stainless steel, which is formed in the form of foil, cannot be prevented.

The present invention has been made in view of such points, and an object thereof is to provide a stainless steel for metal foils with excellent surface texture, a stainless steel foil, and methods for producing them.

### Solution to Problem

The stainless steel for metal foils according to claim 1 contains C: 0.0001 mass% or more and 0.15 mass% or less, Si: 0.30 mass% or more and 2.0 mass% or less, Mn: 0.1 mass% or more and 15 mass% or less, P: 0.040 mass% or less, Ni: 5 mass% or more and 30 mass% or less, S: 0.0001 mass% or more and 0.01 mass% or less, Cr: 16 mass% or more and 25 mass% or less, Mo: 5 mass% or less, Al: 0.005 mass% or less, Ca: 0.0030 mass% or less, Mg: 0.0010 mass% or less, O: 0.0010 mass% or more and 0.0060 mass% or less, N: 0.0001 mass% or more and 0.5 mass% or less, and the remainder including Fe and inevitable impurities, wherein the number of inclusions with a maximum equivalent circle diameter of 5 **µ**m or more is 0.5 inclusions/mm² or less in a thickness of 0.0010 mm or more and 0.2 mm or less.

The stainless steel for metal foils according to claim 2 does not include a first inclusion with an equivalent circle diameter of 5 **µ**m or more, having the average composition of MnO: 10 mass% or more, Cr₂O₃ + Al₂O₃: 30 mass% or more, and CaO: 10 mass% or less, and a second inclusion with an equivalent circle diameter of 5 **µ**m or more, having the average composition of MgO: 10 mass% or more, and Al₂O₃: 20 mass% or more in the stainless steel for metal foils according to claim 1.

The stainless steel for metal foils according to claim 3 further contains at least any one of Cu: 0.1 mass% or more and 4.0 mass% or less, REM: 0.00001 mass% or more and 0.0030 mass% or less, B: 0.0001 mass% or more and 0.0050 mass% or less, Ti: 0.01 mass% or more and 0.50 mass% or less, Nb: 0.01 mass% or more and 0.50 mass% or less, V: 0.01 mass% or more and 1.00 mass% or less, W: 0.01 mass% or more and 1.00 mass% or less, Co: 0.01 mass% or more and 1.00 mass% or less, and Sn: 0.01 mass% or more and 1.00 mass% or less in the stainless steel for metal foils according to claim 1 or 2.

The stainless steel foil according to claim 4 has a thickness of 0.010 mm or more and 0.2 mm or less, and contains the component composition of C: 0.0001 mass% or more and 0.15 mass% or less, Si: 0.30 mass% or more and 2.0 mass% or less, Mn: 0.1 mass% or more and 15 mass% or less, P: 0.040 mass% or less, Ni: 5 mass% or more and 30 mass% or less, S: 0.0001 mass% or more and 0.01 mass% or less, Cr: 16 mass% or more and 25 mass% or less, Mo: 5 mass% or less, Al: 0.005 mass% or less, Ca: 0.0030 mass% or less, Mg: 0.0010 mass% or less, O: 0.0010 mass% or more and 0.0060 mass% or less, N: 0.0001 mass% or more and 0.5 mass% or less, and the remainder including Fe and inevitable impurities, wherein the number of inclusions with a maximum equivalent circle diameter of 5 **µ**m or more is 0.5 inclusions/mm² or less.

The stainless steel foil according to claim 5 further contains at least any one of Cu: 0.1 mass% or more and 4.0 mass% or less, REM: 0.00001 mass% or more and 0.0030 mass% or less, B: 0.0001 mass% or more and 0.0050 mass% or less, Ti: 0.01 mass% or more and 0.50 mass% or less, Nb: 0.01 mass% or more and 0.50 mass% or less, V: 0.01 mass% or more and 1.00 mass% or less, W: 0.01 mass% or more and 1.00 mass% or less, Co: 0.01 mass% or more and 1.00 mass% or less, and Sn: 0.01 mass% or more and 1.00 mass% or less in the stainless steel foil according to claim 4.

The method for producing a stainless steel for metal foils according to claim 6 is a method for producing a stainless steel for metal foils to produce the stainless steel for metal foils according to any one of claims 1 to 3, the method including a refining step of performing refining in VOD or AOD, wherein the slag composition is, in a mass% ratio, CaO/SiO₂: 1.1 or more and 1.7 or less, Al₂O₃: 4.0 mass% or less, and MgO: 10.0 mass% or less by adjusting Al and Al₂O₃ contained in a raw material or a ladle, carrying out deoxidation using a Fe-Si alloy or metal Si, and also adding CaO or SiO₂ in the refining step, and moreover molten steel is stirred at a stirring power of 50 W/ton or more for 5 minutes or more after adding a refining slag material and an alloy material.

The method for producing a stainless steel foil according to claim 7 is a method for producing a stainless steel foil to produce the stainless steel foil according to claim 4 or 5, the method including a refining step of performing refining in VOD or AOD, wherein the slag composition is, in a mass% ratio, CaO/SiO₂: 1.1 or more and 1.7 or less, Al₂O₃: 4.0 mass% or less, and MgO: 10.0 mass% or less by adjusting Al and Al₂O₃ contained in a raw material or a ladle, carrying out deoxidation using a Fe-Si alloy or metal Si, and also adding CaO or SiO₂ in the refining step, and moreover molten steel is stirred at a stirring power of 50 W/ton or more for 5 minutes or more after adding a refining slag material and an alloy material.

### Advantageous Effects of Invention

According to the present invention, holes at the time of production, and variations in fatigue properties can be reduced, resulting in excellent surface texture. Description of Embodiments

One embodiment of the present invention will now be described.

The stainless steel for metal foils of the present embodiment (hereinafter, simply referred to as stainless steel) is a stainless steel for metal foils of an austenitic stainless steel, which contains 0.0001 mass% or more and 0.15 mass% or less of C (carbon), 0.30 mass% or more and 2.0 mass% or less of Si (silicon), 0.1 mass% or more and 15 mass% or less of Mn (manganese), 0.040 mass% or less of P (phosphorus), 5 mass% or more and 30 mass% or less of Ni (nickel), 0.0001 mass% or more and 0.01 mass% or less of S (sulfur), 16 mass% or more and 25 mass% or less of Cr (chromium), 5 mass% or less of Mo (molybdenum), 0.005 mass% or less of Al (aluminum), 0.0030 mass% or less of Ca (calcium), 0.0010 mass% or less of Mg (magnesium), 0.0010 mass% or more and 0.0060 mass% or less of O (oxygen), 0.0001 mass% or more and 0.5 mass% or less of N (nitrogen), and the remainder including Fe (iron) and inevitable impurities. It should be noted that the stainless steel may contain 0.1 mass% or more and 4.0 mass% or less of Cu (copper), and/or 0.00001 mass% or more and 0.0030 mass% or less of REM (rare-earth element) . In addition to the above, the stainless steel may contain predetermined amounts of elements such as Sn (tin), Nb (niobium), Ti (titanium), Co (cobalt), V (vanadium), W (tungsten), and B (boron).

In addition, the stainless steel foil of the present embodiment is produced with a thickness of 0.010 mm or more and 0.2 mm or less after predetermined production steps described below.

In the stainless steel of the present embodiment, the number density of a hard inclusion with a greater equivalent circle diameter is controlled to prevent holes and fatigue properties in end foil products. Specifically, the stainless steel of the present embodiment does not include a first inclusion with an equivalent circle diameter of 5 µm or more, having the average composition of, in mass percentage, MnO: 10 mass% or more, Cr₂O₃ + Al₂O₃: 30 mass% or more, and CaO: 10 mass% or less, and a second inclusion with an equivalent circle diameter of 5 **µ**m or more, having the average composition of MgO: 10 mass% or more, and Al₂O₃: 20 mass% or more in a semifinished product (cast piece) such as a slab before hot rolling. The stainless steel of the present embodiment is adjusted in the form of foil so that the number density of inclusions with a maximum equivalent circle diameter of 5 µm or more among the number of inclusions obtained by measuring an optional cross section will be 0.5 inclusions/mm² or less. The composition of the first inclusion and second inclusion changes to hard MgO·Al₂O₃ or MnO·Al₂O₃ Cr₂O₃ inclusions by rolling a slab. When the stainless steel is rolled from the state of a slab, the surface area increases while inclusions contained in the inside thereof are exposed on the surface. Therefore, the number of inclusions per unit area is basically constant in the state of being rolled into a foil regardless of the observed site.

C is an austenite stabilizing element, and the hardness and strength of a stainless steel increase by containing C. In contrast, when C is excessively contained, it reacts with Cr or Mn in a base material to deteriorate corrosion resistance. Therefore, the C content is 0.0001 mass% or more and 0.15 mass% or less, and preferably 0.1 mass% or less.

Si is an essential element for deoxidation under low Al conditions. However, when the Si content is higher than 2.0 mass%, the occurrence of hot roll marks is promoted, and also workability is reduced. Therefore, the Si content is 0.30 mass% or more and 2.0 mass% or less, and preferably 0.50 mass% or more and 1.0 mass% or less.

Mn is an effective element for deoxidation, and also an austenite stabilizing element. When the Mn content is lower than 0.1 mass%, the occurrence of hot shortness due to the generation of FeS is promoted, which has a negative effect on manufacturability. Therefore, the Mn content is 0.1 mass% or more, and preferably 0.5 mass% or more and 15 mass% or less.

P is an impurity in a steel making process. When the P content is higher than 0.050 mass%, hot shortness is reduced. Therefore, the P content is 0.040 mass% or less, and preferably 0.030 mass% or less.

Ni is an element which enhances the corrosion resistance of a stainless steel, and also an austenite stabilizing element. The Ni content is 5 mass% or more and 30 mass% or less.

S is an element which enhances the melting characteristics of a stainless steel at the time of welding. However, When the S content is higher than 0.01 mass%, a sulfide-based inclusion is generated, which reduces corrosion resistance. Therefore, the S content is 0.0001 mass% or more and 0.01 mass% or less, and preferably 0.005 mass% or less.

Cr is an essential element to secure the corrosion resistance of a stainless steel. However, when the Cr content is higher than 25 mass%, the production of a stainless steel becomes difficult, and also the Cr₂O₃ percentage content in inclusions increases, and thus MnO·Al₂O₃·Cr₂O₃ is easily generated. Therefore, the Cr content is 16 mass% or more and 25 mass% or less.

Cu is an element which enhances the workability of a stainless steel, and also an austenite stabilizing element. A case where the Cu content is higher than 4.0 mass% has a negative effect on manufacturability such as the occurrence of cracks in cast pieces. In addition, Cu is a selective element, and a case where Cu is not added is also included. Therefore, the Cu content is 0 mass% or more and 4.0 mass% or less, and, when Cu is contained, 0.1 mass% or more and 4.0 mass% or less.

Mo is an element which enhances the corrosion resistance of a stainless steel. However, a case where the Mo content is higher than 5 mass% is not desired because sigma phase generation is promoted, and base material embrittlement is caused. Therefore, the Mo content is 5 mass% or less, and preferably 0.01 mass% or more and 3 mass% or less.

Al is an element which may be added as a deoxidizing material to a stainless steel produced using a versatile refining method, and an element which inevitably enters a steel deoxidized with Si such as the present invention due to erosion of e.g. impurities and a refractory in a raw material. In addition, when the Al content is higher than 0.005 mass%, large and hard MgO ·Al₂O₃ and/or large and hard MnO·Al₂O₃·Cr₂O₃ are generated, which leads to holes at the time of production, and variations in fatigue properties. Therefore, the Al content is 0.005 mass% or less, and preferably 0.003 mass% or less.

Ca is an element which improves the hot workability of a stainless steel. Ca may be added in the form of e.g. a Ca-Si alloy after refining in VOD or AOD described below. In the present embodiment, when the Ca content is higher than 0.0030 mass%, the number of inclusions in a foil increases due to the generation of coarse slag-based inclusions in a cast piece. Therefore, the Ca content is 0.0030 mass% or less (not including a case where Ca is not added), and preferably 0.0010 mass% or less.

Mg is an effective element for deoxidation and an element which inevitably enters a steel deoxidized with Si such as the present invention due to erosion of e.g. impurities and a refractory in a raw material. However, when the Mg content is higher than 0.0010 mass%, large and hard MgO·Al₂O₃ is generated, which leads to holes at the time of production, and variations in fatigue properties. Therefore, the Mg content is 0.0010 mass% or less, and preferably 0.0005 mass% or less.

When the O content is lower than 0.0010 mass%, large and hard MgO·Al₂O₃ is generated, which leads to holes at the time of production, and variations in fatigue properties. In addition, when the O content is higher than 0.0060 mass%, large and hard MnO·Al₂O₃·Cr₂O₃ is generated, which leads to holes at the time of production, and variations in fatigue properties. Therefore, the O content is 0.0010 mass% or more and 0.0060 mass% or less, and preferably 0.0020 mass% or more and 0.0050 mass% or less.

N is an element which enhances the corrosion resistance of a stainless steel, and also an austenite stabilizing element. When the Al content is the above low content, N does not generate inclusions, but when the N content is higher than 0.5 mass%, air bubbles are generated in a steel ingot, which has a negative effect on the manufacturability of a stainless steel. Therefore, the N content is 0.0001 mass% or more and 0.5 mass% or less.

REM is an element which improves the hot workability of a stainless steel. When the REM content is higher than 0.0030 mass%, nozzle clogging occurs, which has a negative effect on the manufacturability of a stainless steel. In addition, REM is a selective element, and a case where REM is not added is also included. Therefore, the REM content is 0 mass% or more and 0.0030 mass% or less, and, when REM is contained, 0.00001 mass% or more and 0.0030 mass% or less.

As with Ca, B is an element which improves the hot workability of a stainless steel, and may be thus added in a range of 0.0050 mass% or less as needed. When B is added, the B content is preferably 0.0001 mass% or more and 0.0030 mass% or less.

Ti and Nb generate precipitation together with C or N, and are effective to prevent grain coarsening at the time of heat treatment. Therefore, each may be added in a range of 0.50 mass% or less. When Ti and Nb are added, each content is preferably 0.01 mass% or more and 0.30 mass% or less.

V, W, Co, and Sn all are elements which enhance the corrosion resistance of a stainless steel, and may be added as needed. When they are added, each content is preferably V: 0.01 mass% or more and 1.00 mass% or less, W: 0.01 mass% or more and 1.00 mass% or less, Co: 0.01 mass% or more and 1.00 mass% or less, and Sn: 0.01 mass% or more and 1.00 mass% or less.

Next, a method for producing the above stainless steel will be described.

When producing the above stainless steel, a raw material is melted and refined to produce a stainless steel having components adjusted as described above.

In the refining step, VOD or AOD is used. LF may be carried out after AOD.

In the present embodiment, in order to suppress the generation of a slag-based inclusion occurring at the time of reduction in the refining step, slag composition is controlled by increasing the purity of a reducing material, and controlling the feeding amount, and also the composition of inclusions in a stainless steel is controlled by specifying a deoxidizing element and the O concentration in a metal.

That is, when MgO·Al₂O₃ and MnO·Al₂O₃ Cr₂O₃ are generated in a slag-based inclusion (CaO-SiO₂-Al₂O₃-MgO-MnO-Cr₂O₃-based) mainly confirmed in a cast piece, the slag-based inclusion is expanded and finely divided at the time of rolling. In contrast, hard MgO·Al₂O₃ and MnO·Al₂O₃·Cr₂O₃ remain as relatively large inclusions in an end foil product, which leads to holes at the time of production and a reduction in fatigue properties. In the present embodiment, therefore, while making a state in which MnO·Al₂O₃·Cr₂O₃, which in the form of foil, can be controlled to fine inclusions, is easily generated on purpose, the slag composition, deoxidizing element, and O concentration are adjusted so that MnO·Al₂O₃·Cr₂O₃ will become fine.

In the present embodiment, adjustment is made so that Al and Al₂O₃ contained in a raw material or a ladle will be removed to the extent of not having problems with refining in the refining step. In addition, deoxidation is performed using a sufficient amount of Fe-Si alloy or metal Si so that the O concentration in a steel will be within the above range, and furthermore CaO or SiO₂ is added. At this time, a predetermined amount of CaF₂ may be contained to secure the fluidity of a slag.

Therefore, the refining slag composition is controlled at, in mass% ratio, CaO/SiO₂: 1.1 or more and 1.7 or less, preferably 1.2 or more and 1.6 or less, Al₂O₃: 4.0 mass% or less, preferably 2.0 mass% or less, and MgO: 10.0 mass% or less, preferably 8.0 mass% or less. This slag composition is values after VOD or after AOD and LF. When CaO/SiO₂ is higher than 1.7, the second inclusion is generated, and when CaO/SiO₂ is lower than 1.1, the first inclusion is generated.

In addition, molten steel is stirred at a stirring power of 50 W/ton or more for 5 minutes or more after feeding a refining slag. When the stirring power is 50 W/ton or less, the second inclusion with a low density and a high degree of harmfulness does not sufficiently float, and thus excessively increases. In addition, when the stirring time is less than 5 minutes, both the first inclusion and second inclusion do not float and thus excessively increase. When the stirring power is 150 W/ton or more, there is a risk that the second inclusion will catch slag existing on the molten steel and increase. Therefore, the stirring power is desirably 150 W/ton or less. The upper limit of the stirring time is not particularly determined, but the stirring time is preferably 30 minutes or less because the effect by stirring is saturated while loads of equipment and efficiency for the production are reduced. In addition to methods by gas blowing in VOD and LF, stirring can be carried out by other methods such as mechanical mixing and electromagnetic stirring.

After the refining step followed by the continuous casting process, a slab with a predetermined thickness is formed.

As a result, a stainless steel, which does not include a first inclusion with an equivalent circle diameter of 5 µm or more, having the average composition of MnO: 10 mass% or more, Cr₂O₃ + Al₂O₃: 30 mass% or more, and CaO: 10 mass% or less, and a second inclusion with an equivalent circle diameter of 5 µm or more, having the average composition of MgO: 10 mass% or more, and Al₂O₃: 20 mass% or more, can be produced.

Therefore, when this stainless steel is subjected to a hot rolling step, hot rolled sheet annealing and pickling step, cold rolling step, cold rolled sheet annealing and pickling step, cold rolling step, bright annealing step, and polishing step to produce a stainless steel foil with a thickness of 0.010 mm or more and 0.2 mm or less, MnO·Al₂O₃·Cr₂O₃ in which the composition of the first inclusion is changed, and MgO·Al₂O₃ in which the composition of the second inclusion is changed, are not contained, and the sum of inclusions with a maximum equivalent circle diameter of 5 **µ**m or more is 0.5 inclusions/mm² or less.

As described above, according to the present embodiment, in order to control the composition of inclusions generated at the time of reduction in the refining step, the slag composition at the time of refining, and the deoxidizing element and the O concentration in molten steel are adjusted to obtain controlled appropriate inclusion composition. Therefore, an austenitic stainless steel with excellent surface texture can be provided, in which holes at the time of production, and variations in fatigue properties can be reduced by reducing the number of inclusions on the surface layer.

### Examples

### (Example 1)

Examples and Comparative Examples will now be described.

After melting scrap of an austenitic stainless steel, having each steel composition of samples No. 1 to 55 shown in Table 1, and an alloy material in an electric furnace, decarburization refining was carried out by an AOD refining process, or by a converter and a VOD refining process.

**[Table 1]**

| | | Components in steel | | | | | | | | | | | | | | |
|---|---|---|---|---|---|---|---|---|---|---|---|---|---|---|---|---|
| Category | No. | C | Si | Mn | P | S | Ni | Cr | Mo | Cu | Al | N | Ca | Mg | O | Others |
| | 1 | 0.08 | 0.5 | 0.7 | 0.03 | 0.00 35 | 7.6 | 16.4 | 0.4 | 0.1 | 0.00 2 | 0.06 3 | 0.00 01 | 0.00 02 | 0.00 36 | |
| | 2 | 0.10 | 0.4 | 1.0 | 0.01 | 0.00 44 | 8.1 | 16.7 | 0.3 | 0.2 | 0.00 1 | 0.03 6 | 0.00 02 | 0.00 01 | 0.00 39 | |
| | 3 | 0.06 | 0.6 | 0.7 | 0.02 | 0.00 40 | 7.7 | 16.5 | 0.2 | 0.1 | 0.00 1 | 0.04 0 | 0.00 01 | 0.00 02 | 0.00 40 | |
| | 4 | 0.06 | 0.7 | 0.5 | 0.03 | 0.00 31 | 7.2 | 16.1 | 0.3 | 0.2 | 0.00 2 | 0.05 6 | 0.00 01 | 0.00 02 | 0.00 37 | |
| | 5 | 0.08 | 0.5 | 0.9 | 0.03 | 0.00 32 | 7.6 | 16.4 | 0.2 | 0.4 | 0.00 2 | 0.05 2 | 0.00 01 | 0.00 02 | 0.00 32 | |
| | 6 | 0.07 | 0.6 | 0.8 | 0.03 | 0.00 43 | 7.9 | 16.6 | 0.3 | 0.2 | 0.00 1 | 0.06 5 | 0.00 01 | 0.00 01 | 0.00 40 | |
| | 7 | 0.08 | 0.7 | 0.9 | 0.03 | 0.00 25 | 7.1 | 16.1 | 0.4 | 0.3 | 0.00 2 | 0.04 7 | 0.00 01 | 0.00 02 | 0.00 32 | |
| | 8 | 0.12 | 0.7 | 1.0 | 0.03 | 0.00 32 | 7.5 | 16.4 | 0.3 | 0.4 | 0.00 2 | 0.06 0 | 0.00 01 | 0.00 02 | 0.00 34 | |
| | 9 | 0.07 | 0.9 | 0.9 | 0.02 | 0.00 24 | 7.2 | 16.1 | 0.1 | 0.4 | 0.00 2 | 0.06 9 | 0.00 01 | 0.00 02 | 0.00 30 | |
| | 10 | 0.09 | 0.6 | 0.8 | 0.03 | 0.00 52 | 8.2 | 16.8 | 0.4 | 0.2 | 0.00 1 | 0.05 1 | 0.00 02 | 0.00 01 | 0.00 47 | |
| | 11 | 0.06 | 0.7 | 0.8 | 0.04 | 0.00 23 | 7.3 | 16.2 | 0.1 | 0.2 | 0.00 2 | 0.04 4 | 0.00 01 | 0.00 02 | 0.00 28 | |
| | 12 | 0.05 | 0.6 | 0.7 | 0.02 | 0.00 45 | 7.9 | 16.6 | 0.3 | 0.2 | 0.00 1 | 0.02 4 | 0.00 01 | 0.00 01 | 0.00 42 | |
| | 13 | 0.05 | 0.7 | 0.6 | 0.03 | 0.00 35 | 7.5 | 16.3 | 0.4 | 0.2 | 0.00 2 | 0.04 0 | 0.00 01 | 0.00 02 | 0.00 37 | |
| | 14 | 0.05 | 0.5 | 0.6 | 0.02 | 0.00 55 | 8.3 | 16.9 | 0.2 | 0.2 | 0.00 1 | 0.03 4 | 0.00 02 | 0.00 01 | 0.00 48 | |
| | 15 | 0.06 | 0.5 | 0.6 | 0.03 | 0.00 42 | 7.8 | 16.6 | 0.2 | 0.3 | 0.00 2 | 0.04 2 | 0.00 01 | 0.00 02 | 0.00 40 | |
| | 16 | 0.06 | 0.6 | 0.7 | 0.02 | 0.00 35 | 7.7 | 16.5 | 0.4 | 0.3 | 0.00 2 | 0.03 8 | 0.00 01 | 0.00 02 | 0.00 34 | |
| | 17 | 0.04 | 0.4 | 0.8 | 0.02 | 0.00 57 | 8.4 | 16.9 | 0.2 | 0.3 | 0.00 1 | 0.01 4 | 0.00 02 | 0.00 01 | 0.00 56 | |
| | 18 | 0.04 | 0.8 | 0.9 | 0.03 | 0.00 37 | 7.6 | 16.4 | 0.3 | 0.3 | 0.00 2 | 0.02 8 | 0.00 01 | 0.00 02 | 0.00 38 | |
| | 19 | 0.07 | 0.5 | 1.0 | 0.01 | 0.00 41 | 7.9 | 16.6 | 0.3 | 0.3 | 0.00 1 | 0.03 2 | 0.00 01 | 0.00 01 | 0.00 38 | |
| Examples | 20 | 0.02 | 0.7 | 0.7 | 0.01 | 0.00 41 | 12. 3 | 18.5 | 2.6 | 0.2 | 0.00 2 | 0.04 0 | 0.00 01 | 0.00 02 | 0.00 40 | |
| | 21 | 0.02 | 0.4 | 0.8 | 0.03 | 0.00 47 | 12. 7 | 18.8 | 2.7 | 0.2 | 0.00 1 | 0.03 2 | 0.00 02 | 0.00 01 | 0.00 41 | |
| | 22 | 0.02 | 0.7 | 0.8 | 0.03 | 0.00 38 | 12. 3 | 18.6 | 2.5 | 0.2 | 0.00 2 | 0.01 8 | 0.00 01 | 0.00 02 | 0.00 36 | |
| | 23 | 0.02 | 0.6 | 0.7 | 0.02 | 0.00 36 | 12. 0 | 18.4 | 2.4 | 0.4 | 0.00 2 | 0.02 3 | 0.00 01 | 0.00 02 | 0.00 37 | |
| | 24 | 0.02 | 0.7 | 0.7 | 0.02 | 0.00 27 | 11. 9 | 18.3 | 2.5 | 0.3 | 0.00 2 | 0.04 1 | 0.00 01 | 0.00 02 | 0.00 30 | |
| | 25 | 0.02 | 0.4 | 0.9 | 0.04 | 0.00 54 | 12. 9 | 18.9 | 2.6 | 0.3 | 0.00 1 | 0.03 4 | 0.00 02 | 0.00 01 | 0.00 47 | |
| | 26 | 0.03 | 0.6 | 0.7 | 0.03 | 0.00 34 | 12. 2 | 18.5 | 2.5 | 0.4 | 0.00 2 | 0.01 3 | 0.00 01 | 0.00 02 | 0.00 34 | |
| | 27 | 0.02 | 0.6 | 0.6 | 0.03 | 0.00 36 | 12. 0 | 18.3 | 2.7 | 0.3 | 0.00 2 | 0.03 7 | 0.00 01 | 0.00 02 | 0.00 38 | |
| | 28 | 0.02 | 0.9 | 0.6 | 0.02 | 0.00 54 | 12. 8 | 18.9 | 2.6 | 0.2 | 0.00 1 | 0.03 3 | 0.00 02 | 0.00 01 | 0.00 48 | |
| | 29 | 0.02 | 0.5 | 0.8 | 0.02 | 0.00 55 | 12. 8 | 18.9 | 2.4 | 0.2 | 0.00 1 | 0.03 4 | 0.00 02 | 0.00 01 | 0.00 49 | |
| | 30 | 0.02 | 0.5 | 0.8 | 0.01 | 0.00 38 | 8.5 | 16.4 | 0.3 | 2.2 | 0.00 2 | 0.02 1 | 0.00 01 | 0.00 02 | 0.00 39 | |
| | 31 | 0.02 | 0.4 | 0.8 | 0.03 | 0.00 47 | 8.2 | 16.8 | 0.1 | 0.1 | 0.00 3 | 0.04 0 | 0.00 02 | 0.00 01 | 0.00 42 | |
| | 32 | 0.01 | 0.5 | 0.8 | 0.01 | 0.00 33 | 7.4 | 16.3 | 0.5 | 0.3 | 0.00 2 | 0.02 6 | 0.00 08 | 0.00 02 | 0.00 36 | |
| | 33 | 0.01 | 0.8 | 0.6 | 0.02 | 0.00 21 | 7.0 | 16.0 | 0.1 | 0.3 | 0.00 2 | 0.02 1 | 0.00 01 | 0.00 06 | 0.00 30 | |
| | 34 | 0.02 | 0.5 | 0.8 | 0.01 | 0.00 53 | 6.4 | 16.9 | 0.2 | 0.3 | 0.00 1 | 0.01 7 | 0.00 02 | 0.00 01 | 0.00 45 | |
| | 35 | 0.02 | 0.5 | 0.9 | 0.03 | 0.00 39 | 7.8 | 21.0 | 0.4 | 0.2 | 0.00 2 | 0.03 2 | 0.00 01 | 0.00 02 | 0.00 37 | |
| | 36 | 0.01 | 0.3 | 0.6 | 0.02 | 0.00 44 | 12. 3 | 18.5 | 2.6 | 0.2 | 0.00 2 | 0.03 9 | 0.00 01 | 0.00 02 | 0.00 43 | |
| | 37 | 0.02 | 0.6 | 0.8 | 0.03 | 0.00 32 | 12. 1 | 18.4 | 2.2 | 0.3 | 0.00 4 | 0.04 2 | 0.00 01 | 0.00 02 | 0.00 33 | |
| | 38 | 0.01 | 0.6 | 0.6 | 0.03 | 0.00 50 | 12. 6 | 18.7 | 2.1 | 0.3 | 0.00 1 | 0.01 9 | 0.00 02 | 0.00 01 | 0.00 46 | REM = 0.001% |
| | 39 | 0.02 | 0.5 | 0.9 | 0.03 | 0.00 46 | 12. 6 | 18.7 | 1.9 | 0.4 | 0.00 1 | 0.03 6 | 0.00 02 | 0.00 01 | 0.00 42 | B = 0.0020% |
| | 40 | 0.01 | 0.7 | 0.9 | 0.03 | 0.00 34 | 12. 1 | 18.4 | 2.6 | 0.3 | 0.00 2 | 0.04 0 | 0.00 01 | 0.00 02 | 0.00 34 | NB = 0.4% |
| | 41 | 0.10 | 0.6 | 0.7 | 0.01 | 0.00 51 | 7.7 | 16.5 | 0.1 | 0.2 | 0.00 1 | 0.05 9 | 0.00 01 | 0.00 02 | 0.00 74 | |
| | 42 | 0.04 | 0.7 | 1.0 | 0.04 | 0.00 24 | 7.1 | 16.1 | 0.1 | 0.3 | 0.00 4 | 0.04 6 | 0.00 01 | 0.00 02 | 0.00 81 | |
| | 43 | 0.09 | 0.5 | 0.8 | 0.01 | 0.00 54 | 8.3 | 16.9 | 0.4 | 0.4 | 0.00 6 | 0.04 6 | 0.00 02 | 0.00 01 | 0.00 49 | |
| | 44 | 0.09 | 0.7 | 0.7 | 0.03 | 0.00 32 | 7.3 | 16.2 | 0.2 | 0.3 | 0.00 2 | 0.06 4 | 0.00 31 | 0.00 02 | 0.00 36 | |
| | 45 | 0.09 | 0.2 | 0.5 | 0.04 | 0.00 51 | 8.1 | 16.7 | 0.1 | 0.2 | 0.00 1 | 0.05 4 | 0.00 02 | 0.00 01 | 0.00 67 | |
| | 46 | 0.07 | 0.6 | 1.0 | 0.02 | 0.00 35 | 7.6 | 16.4 | 0.4 | 0.2 | 0.00 02 | 0.01 8 | 0.00 08 | 0.00 08 | 0.00 53 | |
| | 47 | 0.05 | 0.5 | 0.7 | 0.01 | 0.00 29 | 7.4 | 16.3 | 0.2 | 0.3 | 0.00 2 | 0.01 7 | 0.00 01 | 0.00 12 | 0.00 32 | |
| | 48 | 0.04 | 0.6 | < 0.1 | 0.04 | 0.00 38 | 7.8 | 16.5 | 0.2 | 0.1 | 0.00 2 | 0.01 4 | 0.00 01 | 0.00 02 | 0.00 37 | |
| Compar ative Exampl es | 49 | 0.02 | 0.6 | 0.7 | 0.02 | 0.00 27 | 11. 9 | 18.3 | 2.5 | 0.2 | 0.00 2 | 0.03 0 | 0.00 01 | 0.00 02 | 0.00 63 | |
| | 50 | 0.02 | 0.6 | 0.6 | 0.02 | 0.00 53 | 12. 8 | 18.9 | 2.7 | 0.3 | 0.00 5 | 0.01 6 | 0.00 02 | 0.00 01 | 0.00 48 | |
| | 51 | 0.01 | 0.1 | 0.8 | 0.01 | 0.00 45 | 12. 5 | 18.7 | 2.5 | 0.3 | 0.00 2 | 0.04 2 | 0.00 02 | 0.00 01 | 0.00 56 | |
| | 52 | 0.02 | 0.6 | 0.7 | 0.01 | 0.00 19 | 12. 7 | 18.8 | 2.5 | 0.2 | 0.00 5 | 0.02 0 | 0.00 06 | 0.00 04 | 0.00 17 | |
| | 53 | 0.02 | 0.3 | 0.8 | 0.04 | 0.00 18 | 11. 6 | 18.0 | 2.5 | 0.3 | 0.00 2 | 0.01 9 | 0.00 01 | 0.00 02 | 0.00 09 | |
| | 54 | 0.02 | 0.6 | 0.7 | 0.02 | 0.00 38 | 7.5 | 16.3 | 2.4 | 0.1 | 0.00 2 | 0.02 5 | 0.00 01 | 0.00 02 | 0.00 64 | |
| | 55 | 0.06 | 0.5 | 0.9 | 0.03 | 0.01 08 | 12. 1 | 16.7 | 2.2 | 0.2 | 0.00 1 | 0.01 9 | 0.00 02 | 0.00 01 | 0.00 79 | |

The amount of each element shown in Table 1 is a value by mass%. In addition, sample No. 38 includes 0.001 mass% of REM, sample No. 39 includes 0.002 mass% of B, and sample No. 40 includes 0.4 mass% of Nb.

In addition, the reduction, and deoxidation and desulfurization of oxidized Cr were carried out by adding limestone, fluorite, and ferrosilicon. At this time, the slag basicity CaO/SiO₂ was changed between 1.0 and 2.0, and also the concentrations of Si and Al used as deoxidizing agents were changed. It should be noted that after adding a refining slag, Ar bottom-blowing was carried out in VOD or LF, and molten steel was stirred at a stirring power of 100 W/ton for 20 minutes.

Furthermore, in a ladle (after molten steel tapping into a ladle in the case of AOD refining), the temperature was adjusted by adjusting the components and bubbling Ar (argon), and a slab was produced by a continuous casting process.

A sample was cut out at 10 mm from the surface layer of this slab, and the average composition of inclusions with an equivalent circle diameter of 5 µm or more existing in a 100 mm² area was measured using SEM (scanning electron microscope) and EDS (energy dispersive X-ray spectroscopy).

The above slab was further subjected to hot rolling (reduction of area: 90% or more), hot rolled sheet annealing and pickling, cold rolling, cold rolled sheet annealing and pickling to produce a cold rolled steel strip with 0.3 mm.

A foil strip with 0.05 mm was obtained by cold rolling, and was subjected to bright annealing at 1150°C for solution treatment. After polishing with emery paper and buffing the surface layer of this foil product, the number of inclusions with a maximum equivalent circle diameter of 5 µm or more existing in a 300 mm² area was measured.

**[Table 2]**

| | | Slag components | | | Cast piece | | | | | | Foil |
|---|---|---|---|---|---|---|---|---|---|---|---|
| Category | No. | C/S | Al₂O₃ | MgO | SiO₂ | CaO | Al₂O₃ | MgO | MnO | Cr₂O₃ | Number of inclusions inclusions/mm² (≥ 5 µm) |
| Examples | 1 | 1.5 | 1.5 | 7.6 | 44.8 | 16.7 | 18.5 | 9.1 | 5.1 | 2.7 | 0.29 |
| | 2 | 1.5 | 1.8 | 8.0 | 41.0 | 19.0 | 21.6 | 5.1 | 5.7 | 2.1 | 0.20 |
| | 3 | 1.4 | 1.5 | 5.9 | 47.3 | 12.3 | 20.8 | 6.7 | 5.8 | 0.1 | 0.24 |
| | 4 | 1.4 | 0.9 | 6.9 | 48.2 | 17.3 | 18.2 | 2.2 | 5.0 | 6.1 | 0.20 |
| | 5 | 1.6 | 0.9 | 7.1 | 39.0 | 18.9 | 26.5 | 2.7 | 2.8 | 3.1 | 0.14 |
| | 6 | 1.5 | 1.3 | 5.5 | 45.2 | 15.3 | 22.3 | 2.5 | 5.9 | 0.6 | 0.40 |
| | 7 | 1.3 | 1.7 | 5.4 | 45.4 | 15.5 | 19.3 | 8.8 | 3.2 | 0.8 | 0.25 |
| | 8 | 1.4 | 0.7 | 6.4 | 44.0 | 18.0 | 18.0 | 8.3 | 2.5 | 2.5 | 0.22 |
| | 9 | 1.6 | 1.6 | 7.2 | 46.4 | 18.6 | 21.8 | 1.6 | 6.6 | 2.5 | 0.14 |
| | 10 | 1.2 | 0.8 | 7.0 | 48.7 | 11.5 | 23.1 | 1.0 | 1.9 | 5.2 | 0.18 |
| | 11 | 1.4 | 0.5 | 6.2 | 36.7 | 17.8 | 24.8 | 8.9 | 4.5 | 0.4 | 0.18 |
| | 12 | 1.4 | 1.7 | 4.3 | 46.7 | 12.2 | 21.8 | 2.2 | 6.4 | 3.6 | 0.11 |
| | 13 | 1.4 | 1.5 | 7.2 | 46.5 | 12.9 | 24.1 | 2.9 | 6.2 | 5.0 | 0.21 |
| | 14 | 1.4 | 1.1 | 6.6 | 49.6 | 14.0 | 16.9 | 3.0 | 5.0 | 3.4 | 0.27 |
| | 15 | 1.5 | 1.6 | 7.7 | 47.8 | 15.3 | 17.0 | 5.5 | 8.6 | 3.2 | 0.06 |
| | 16 | 1.3 | 1.4 | 6.9 | 37.1 | 17.9 | 22.9 | 9.2 | 4.4 | 0.5 | 0.37 |
| | 17 | 1.4 | 1.5 | 6.0 | 47.3 | 11.3 | 16.5 | 5.4 | 7.6 | 3.3 | 0.25 |
| | 18 | 1.5 | 0.8 | 7.6 | 45.6 | 13.7 | 20.2 | 1.3 | 6.4 | 4.8 | 0.37 |
| | 19 | 1.2 | 0.7 | 6.3 | 43.6 | 17.4 | 24.5 | 5.7 | 2.6 | 3.5 | 0.25 |
| | 20 | 1.5 | 1.6 | 8.0 | 45.1 | 13.5 | 16.6 | 4.7 | 5.4 | 5.6 | 0.27 |
| | 21 | 1.6 | 1.7 | 6.5 | 43.7 | 21.6 | 20.3 | 3.9 | 3.1 | 1.0 | 0.03 |
| | 22 | 1.6 | 1.2 | 7.4 | 40.8 | 18.5 | 22.0 | 8.3 | 3.1 | 0.3 | 0.12 |
| | 23 | 1.5 | 1.2 | 5.2 | 43.9 | 12.8 | 23.4 | 4.8 | 4.3 | 3.8 | 0.01 |
| | 24 | 1.7 | 1.8 | 7.5 | 39.8 | 18.8 | 24.2 | 4.5 | 2.8 | 2.8 | 0.21 |
| | 25 | 1.5 | 1.2 | 4.2 | 46.2 | 17.1 | 25.0 | 2.6 | 2.6 | 3.5 | 0.41 |
| | 26 | 1.3 | 2.0 | 5.2 | 42.6 | 20.3 | 18.3 | 6.0 | 5.5 | 0.4 | 0.34 |
| | 27 | 1.4 | 0.8 | 5.4 | 46.9 | 12.9 | 23.0 | 4.3 | 6.3 | 1.4 | 0.41 |
| | 28 | 1.4 | 0.8 | 5.9 | 49.1 | 14.6 | 21.6 | 2.7 | 3.2 | 2.8 | 0.29 |
| | 29 | 1.1 | 0.5 | 5.2 | 47.6 | 11.2 | 23.0 | 3.0 | 2.6 | 3.8 | 0.37 |
| | 30 | 1.4 | 1.9 | 7.2 | 45.8 | 12.3 | 18.7 | 7.5 | 4.5 | 4.2 | 0.16 |
| | 31 | 1.6 | 2.9 | 6.5 | 42.0 | 18.2 | 25.0 | 0.1 | 4.5 | 3.2 | 0.07 |
| | 32 | 1.4 | 1.9 | 6.7 | 46.0 | 12.9 | 20.4 | 6.9 | 5.2 | 3.1 | 0.01 |
| | 33 | 1.5 | 1.9 | 9.8 | 46.3 | 16.6 | 15.1 | 7.8 | 3.3 | 3.4 | 0.22 |
| | 34 | 1.6 | 1.7 | 5.0 | 42.8 | 18.9 | 21.2 | 2.3 | 4.6 | 2.9 | 0.23 |
| | 35 | 1.6 | 1.6 | 5.4 | 42.7 | 17.4 | 26.4 | 2.7 | 2.2 | 1.6 | 0.19 |
| | 36 | 1.4 | 1.5 | 4.7 | 48.9 | 11.8 | 20.4 | 6.0 | 3.4 | 3.1 | 0.38 |
| | 37 | 1.2 | 3.8 | 7.6 | 43.4 | 19.7 | 23.1 | 5.6 | 1.0 | 0.1 | 0.42 |
| | 38 | 1.4 | 1.5 | 4.5 | 49.2 | 12.4 | 17.6 | 3.8 | 7.0 | 1.6 | 0.03 |
| | 39 | 1.6 | 0.5 | 7.4 | 45.6 | 17.7 | 23.0 | 0.7 | 1.2 | 3.6 | 0.21 |
| | 40 | 1.6 | 1.3 | 7.1 | 39.0 | 16.2 | 23.4 | 7.9 | 3.2 | 3.2 | 0.34 |
| Comparati ve Examples | 41 | 1.6 | 2.1 | 4.3 | 42.1 | 8.7 | 27.0 | 3.9 | 13.2 | 4.3 | 0.82 |
| | 42 | 1.0 | 4.9 | 8.1 | 32.5 | 8.1 | 28.2 | 11.1 | 14.4 | 5.2 | 1.12 |
| | 43 | 1.7 | 3.1 | 4.0 | 39.2 | 16.5 | 25.4 | 12.7 | 4.1 | 1.6 | 0.98 |
| | 44 | 1.4 | 0.9 | 6.7 | 44.5 | 32.1 | 12.9 | 6.7 | 2.8 | 0.8 | 0.67 |
| | 45 | 1.4 | 2.4 | 7.2 | 43.6 | 7.9 | 25.7 | 4.2 | 12.4 | 6.1 | 0.83 |
| | 46 | 1.7 | 1.1 | 11.5 | 39.8 | 21.0 | 21.4 | 13.1 | 3.7 | 0.6 | 0.71 |
| | 47 | 1.9 | 2.1 | 14.2 | 38.2 | 22.4 | 22.1 | 15.1 | 1.1 | 0.9 | 0.69 |
| | 48 | 1.6 | 1.5 | 9.6 | 39.5 | 9.5 | 23.9 | 3.4 | 10.1 | 6.6 | 0.61 |
| | 49 | 1.0 | 0.7 | 7.2 | 41.6 | 6.9 | 11.9 | 5.0 | 18.9 | 9.9 | 0.93 |
| | 50 | 1.7 | 4.6 | 6.1 | 34.9 | 17.0 | 31.0 | 12.9 | 2.6 | 1.2 | 0.79 |
| | 51 | 1.4 | 1.8 | 6.9 | 39.8 | 12.5 | 17.7 | 3.0 | 9.0 | 8.2 | 0.72 |
| | 52 | 1.6 | 4.1 | 6.2 | 33.1 | 27.7 | 22.9 | 10.9 | 3.5 | 1.1 | 0.87 |
| | 53 | 1.8 | 3.1 | 6.3 | 32.7 | 31.9 | 21.3 | 11.1 | 1.2 | 0.8 | 0.95 |
| | 54 | 1.3 | 2.2 | 8.0 | 43.6 | 6.7 | 22.2 | 3.5 | 14.3 | 8.9 | 0.73 |
| | 55 | 0.9 | 0.6 | 8.6 | 42.0 | 3.6 | 21.2 | 1.3 | 18.2 | 9.7 | 1.10 |

Samples No. 1 to 40 in Tables each correspond to Examples. Because these samples met the ranges of the components in a steel and the slag components in the refining step in the above embodiment, there were a few specified hard inclusions (MnO·Al₂O₃·Cr₂O₃ and MgO·Al₂O₃), and the number density was low (0.42 inclusions/mm² or less), and good quality could be obtained.

In contrast, samples No. 41 to 55 in Tables each correspond to Comparative Examples. Because these samples were beyond the ranges of the components in a steel and/or the slag components in the refining step in the above embodiment (underlines in Table), there were many specified hard inclusions (MnO ·Al₂O₃ ·Cr₂O₃ and MgO·Al₂O₃), and the number density was high (underlines in Table).

### (Example 2)

Samples No. 56 to 64 shown in Table 3 were collected and evaluated in the same manner as in Example 1 except that the amount of bottom blowing gas was changed in VOD or LF, and the stirring power and the stirring time were changed as shown in Table 4.

**[Table 3]**

| | | Components in steel | | | | | | | | | | | | | | |
|---|---|---|---|---|---|---|---|---|---|---|---|---|---|---|---|---|
| Categ ory | No. | C | Si | Mn | P | S | Ni | Cr | Mo | Cu | Al | N | Ca | Mg | O | Others |
| Examp les | 56 | 0.0 5 | 0.6 | 0.8 | 0.0 2 | 0.00 09 | 7.3 | 17. 6 | 0.2 | 0.1 | 0.00 1 | 0.02 2 | 0.00 01 | 0.00 01 | 0.00 30 | |
| | 57 | 0.0 6 | 0.5 | 0.7 | 0.0 3 | 0.00 12 | 7.7 | 17. 6 | 0.3 | 0.3 | 0.00 3 | 0.02 6 | 0.00 01 | 0.00 01 | 0.00 46 | Sn: 0.1% |
| | | | | | | | | | | | | | | | | Ti: 0.03% |
| | 58 | 0.0 4 | 0.4 | 0.8 | 0.0 3 | 0.00 02 | 7.4 | 17. 7 | 0.2 | 0.2 | 0.00 2 | 0.02 7 | 0.00 03 | 0.00 02 | 0.00 33 | Co: 0.3% |
| | 59 | 0.0 4 | 0.4 | 0.7 | 0.0 3 | 0.00 23 | 7.8 | 17. 5 | 0.2 | 0.1 | 0.00 3 | 0.02 8 | 0.00 01 | 0.00 01 | 0.00 25 | V: 0.2% |
| | 60 | 0.0 6 | 0.5 | 0.8 | 0.0 2 | 0.00 16 | 7.3 | 17. 8 | 0.3 | 0.3 | 0.00 3 | 0.02 1 | 0.00 02 | 0.00 01 | 0.00 42 | W: 0.3% |
| Compa rative Examp les | 61 | 0.0 5 | 0.5 | 0.8 | 0.0 3 | 0.00 24 | 7.3 | 17. 7 | 0.3 | 0.1 | 0.00 3 | 0.03 4 | 0.00 02 | 0.00 01 | 0.00 43 | |
| | 62 | 0.0 6 | 0.6 | 0.8 | 0.0 2 | 0.00 12 | 7.5 | 17. 4 | 0.2 | 0.2 | 0.00 4 | 0.03 3 | 0.00 05 | 0.00 02 | 0.00 33 | |
| | 63 | 0.0 6 | 0.7 | 0.7 | 0.0 3 | 0.00 17 | 7.7 | 17. 7 | 0.2 | 0.2 | 0.00 3 | 0.03 2 | 0.00 02 | 0.00 01 | 0.00 50 | |
| | 64 | 0.0 5 | 0.7 | 0.7 | 0.0 3 | 0.00 28 | 7.7 | 17. 5 | 0.2 | 0.2 | 0.00 4 | 0.03 9 | 0.00 06 | 0.00 02 | 0.00 32 | |

**[Table 4]**

| | | Slag components | | | Stirring conditions | | Cast piece | | | | | | Foil |
|---|---|---|---|---|---|---|---|---|---|---|---|---|---|
| Catego ry | No · | C/S | Al₂O₃ | MgO | Stirring power W/ton | Holdin g time min | SiO₂ | CaO | Al₂O₃ | MgO | MnO | Cr₂O₃ | Number of inclusions inclusions/mm 2 (≥ 5 µm) |
| Exampl es | 56 | 1.3 | 2.5 | 7.5 | 65 | 22 | 44.8 | 31.5 | 15.1 | 6.3 | 1.3 | 1.1 | 0.17 |
| | 57 | 1.4 | 0.7 | 7.7 | 65 | 17 | 49.2 | 13.7 | 19.8 | 6.6 | 8.5 | 2.2 | 0.25 |
| | 58 | 1.4 | 2.5 | 8.6 | 70 | 19 | 48.6 | 23.2 | 17.2 | 8.3 | 1.7 | 1.0 | 0.26 |
| | 59 | 1.6 | 1.4 | 6.3 | 100 | 8 | 47.3 | 19.7 | 15.7 | 4.4 | 7.5 | 5.4 | 0.13 |
| | 60 | 1.5 | 3.3 | 8.5 | 120 | 7 | 50.6 | 20.5 | 15.8 | 7.9 | 4.2 | 1.0 | 0.11 |
| Compar ative Exampl es | 61 | 1.2 | 2.8 | 7.9 | 20 | 11 | 34.2 | 5.7 | 24.5 | 11.1 | 17.2 | 7.3 | 1.07 |
| | 62 | 1.6 | 2.8 | 8.9 | 20 | 16 | 30.9 | 28.3 | 24.4 | 11.5 | 1.2 | 3.7 | 0.87 |
| | 63 | 1.2 | 2.9 | 8.2 | 80 | 4 | 36.1 | 4.6 | 22.0 | 7.4 | 18.4 | 11.5 | 0.83 |
| | 64 | 1.6 | 2.2 | 7.3 | 200 | 12 | 32.6 | 29.1 | 22.4 | 13.2 | 1.6 | 1.0 | 0.84 |

Samples No. 56 to 60 in Table 4 each correspond to Examples. Because these samples met the conditions of the present invention confirmed in Examples 1 and the stirring power and the stirring time, there were a few specified hard inclusions (MnO·Al₂O₃ Cr₂O₃ and MgO·Al₂O₃), the number density was low, and good quality could be obtained.

In contrast, samples No. 61 to 64 in Table 4 each correspond to Comparative Examples. Although these samples met the conditions of the present invention confirmed in Example 1, because these were beyond the stirring power and the stirring time (underlines in Table), there were many specified hard inclusions (MnO·Al₂O₃·Cr₂O₃ and MgO·Al₂O₃), and the number density was high (underlines in Table).

Therefore, it was verified that as described in the above Examples, by meeting the conditions of the present invention, a stainless steel with excellent surface texture could be produced.

## Claims

1. A stainless steel for metal foils, containing:
C: 0.0001 mass% or more and 0.15 mass% or less, Si: 0.30 mass% or more and 2.0 mass% or less, Mn: 0.1 mass% or more and 15 mass% or less, P: 0.040 mass% or less, Ni: 5 mass% or more and 30 mass% or less, S: 0.0001 mass% or more and 0.01 mass% or less, Cr: 16 mass% or more and 25 mass% or less, Mo: 5 mass% or less, Al: 0.005 mass% or less, Ca: 0.0030 mass% or less, Mg: 0.0010 mass% or less, O: 0.0010 mass% or more and 0.0060 mass% or less, and N: 0.0001 mass% or more and 0.5 mass% or less, and a remainder comprising Fe and inevitable impurities,
wherein the number of inclusions with a maximum equivalent circle diameter of 5 µm or more is 0.5 inclusions/mm² or less in a thickness of 0.010 mm or more and 0.2 mm or less.

2. The stainless steel for metal foils according to claim 1, which does not comprise a first inclusion with an equivalent circle diameter of 5 µm or more, having average composition of MnO: 10 mass% or more, Cr₂O₃ + Al₂O₃: 30 mass% or more, and CaO: 10 mass% or less, and a second inclusion with an equivalent circle diameter of 5 µm or more, having average composition of MgO: 10 mass% or more, and Al₂O₃: 20 mass% or more.

3. The stainless steel for metal foils according to claim 1 or 2, further containing at least any one of Cu: 0.1 mass% or more and 4.0 mass% or less, REM: 0.00001 mass% or more and 0.0030 mass% or less, B: 0.0001 mass% or more and 0.0050 mass% or less, Ti: 0.01 mass% or more and 0.50 mass% or less, Nb: 0.01 mass% or more and 0.50 mass% or less, V: 0.01 mass% or more and 1.00 mass% or less, W: 0.01 mass% or more and 1.00 mass% or less, Co: 0.01 mass% or more and 1.00 mass% or less, and Sn: 0.01 mass% or more and 1.00 mass% or less.

4. A stainless steel foil, having a thickness of 0.010 mm or more and 0.2 mm or less, and containing component composition of C: 0.0001 mass% or more and 0.15 mass% or less, Si: 0.30 mass% or more and 2.0 mass% or less, Mn: 0.1 mass% or more and 15 mass% or less, P: 0.040 mass% or less, Ni: 5 mass% or more and 30 mass% or less, S: 0.0001 mass% or more and 0.01 mass% or less, Cr: 16 mass% or more and 25 mass% or less, Mo: 5 mass% or less, Al: 0.005 mass% or less, Ca: 0.0030 mass% or less, Mg: 0.0010 mass% or less, O: 0.0010 mass% or more and 0.0060 mass% or less, N: 0.0001 mass% or more and 0.5 mass% or less, and a remainder comprising Fe and inevitable impurities, wherein the number of inclusions with a maximum equivalent circle diameter of 5 µm or more is 0.5 inclusions/mm² or less.

5. The stainless steel foil according to claim 4, further containing at least any one of Cu: 0.1 mass% or more and 4.0 mass% or less, REM: 0.00001 mass% or more and 0.0030 mass% or less, B: 0.0001 mass% or more and 0.0050 mass% or less, Ti: 0.01 mass% or more and 0.50 mass% or less, Nb: 0.01 mass% or more and 0.50 mass% or less, V: 0.01 mass% or more and 1.00 mass% or less, W: 0.01 mass% or more and 1.00 mass% or less, Co: 0.01 mass% or more and 1.00 mass% or less, and Sn: 0.01 mass% or more and 1.00 mass% or less.

6. A method for producing a stainless steel for metal foils to produce the stainless steel for metal foils according to any one of claims 1 to 3,
the method comprising a refining step of performing refining in VOD or AOD,
wherein slag composition is, in mass% ratio, CaO/SiO₂: 1.1 or more and 1.7 or less, Al₂O₃: 4.0 mass% or less, and MgO: 10.0 mass% or less by adjusting Al and Al₂O₃ contained in a raw material or a ladle, carrying out deoxidation using a Fe-Si alloy or metal Si, and also adding CaO or SiO₂ in the refining step, and moreover molten steel is stirred at a stirring power of 50 W/ton or more for 5 minutes or more after adding a refining slag material and an alloy material.

7. A method for producing a stainless steel foil to produce the stainless steel foil according to claim 4 or 5,
the method comprising a refining step of performing refining in VOD or AOD,
wherein slag composition is, in mass% ratio, CaO/SiO₂: 1.1 or more and 1.7 or less, Al₂O₃: 4.0 mass% or less, and MgO: 10.0 mass% or less by adjusting Al and Al₂O₃ contained in a raw material or a ladle, carrying out deoxidation using a Fe-Si alloy or metal Si, and also adding CaO or SiO₂ in the refining step, and moreover molten steel is stirred at a stirring power of 50 W/ton or more for 5 minutes or more after adding a refining slag material and an alloy material.
